# EUROPEAN PATENT SPECIFICATION

(11) **EP 3 383 926 B1**
(45) Date of publication and mention of the grant of the patent: **19.07.2023**
(21) Application number: 16802041.0
(22) Date of filing: 28.11.2016
(51) Int. Cl.: C08F 110/06, C08F 4/651, C08F 10/06

(54) **A PROCATALYST FOR POLYMERIZATION OF OLEFINS**
PROKATALYSATOR ZUR POLYMERISATION VON OLEFINEN
PROCATALYSEUR POUR LA POLYMÉRISATION D'OLÉFINES

(30) Priority: 02.12.2015 EP 15197475; 29.09.2016 US 201662401483 P
(43) Date of publication of application: 10.10.2018
(73) Proprietor: SABIC Global Technologies B.V., 4612 PX Bergen op Zoom (NL)
(72) Inventor: ALMOHAMMADI, Bandar, Abdullah, 6160 GA Geleen (NL); MOMAN, Akhlaq, Riyadh 11422 (SA); ALSHAIBAN, Ahmad, Abdullah, Riyadh 11422 (SA); SIDDIQUI, Inaamul, Haq, Riyadh 11422 (SA); PADMANABHAN, Sudhakar, R, 6160 GA Geleen (NL)
(74) Representative: Sabic Intellectual Property Group
(86) International application number: PCT/EP2016/078962
(87) International publication number: WO 2017/093169

(56) References cited:
- WO-A1-2014/001257
- WO-A1-2014/118164
- WO-A1-2015/185489

## Description

The present invention is related to a procatalyst for polymerization. Such catalyst systems are generally referred to as "Ziegler-Natta" catalysts comprising a transition metal-containing solid catalyst compound (also typically referred to as a procatalyst); an organometallic compound (also typically referred to as a co-catalyst) and optionally one or more electron donor compounds (e.g. external electron donors).

Such a procatalyst is for example known from US 4,414,132 and US 4,535,068 wherein a magnesium compound, such as magnesium diethoxide, is reacted with a titanium halide compound in the presence of a halohydrocarbon and e.g. ethyl benzoate or p-methyl toluate as internal donor and moreover an acid halide, such as benzoyl chloride. A disadvantage of these procatalyst is that the value for the xylene solubes is often too high. Moreover, when traces of benzoyl chloride are present this might be toxic and this is hence undesirable.

WO2014/001257, WO2014/118164 and WO2015/185489 disclose a process for producing such procatalyst for polymerisation using Grignard compound, such as phenyl magnesium chloride.

It is an object of the present invention to provide a novel procatalyst that is phthalate free and shows improved values for the XS. It is another object of the present invention to provide a procatalyst that has a high productivity.

It is another object of the present invention to provide a novel procatalyst having increased control of product molecular weight distribution, molecular weight and xylene solubles, and enhanced hydrogen response.

### Summary of the present invention

The present invention relates to a procatalyst for polymerization of olefins, which procatalyst is based on a magnesium compound of the formula MgR'R", wherein R' is an alkoxide or aryloxide group and wherein R" is an alkoxide or aryloxide group or halogen, preferably a magnesium dialkoxide compound, that has been reacted with a tetravalent titanium halide, an activator being a monoester and an internal donor represented by a compound according to formula B wherein each R⁸⁰ group is independently a linear, branched or cyclic hydrocarbyl group selected from alkyl, alkenyl, aryl, aralkyl, or alkylaryl groups, and one or more combinations thereof, preferably having from 1 to 30 carbon atoms; R⁸¹, R⁸², R⁸³, R⁸⁴, R⁸⁵, and R⁸⁶ are each independently selected from hydrogen or a linear, branched or cyclic hydrocarbyl group, selected from alkyl, alkenyl, aryl, aralkyl, or alkylaryl groups, and one or more combinations thereof, preferably having from 1 to 20 carbon atoms; R⁸⁷ is a hydrogen or a linear, branched or cyclic hydrocarbyl group, selected from alkyl, alkenyl, aryl, aralkyl, alkoxycarbonyl or alkylaryl groups, and one or more combinations thereof, preferably having from 1 to 20 carbon atoms; N is nitrogen atom; O is oxygen atom; and C is carbon atom.

In an embodiment, the activator is a benzoate ester, more preferably ethylbenzoate, and said internal donor is: 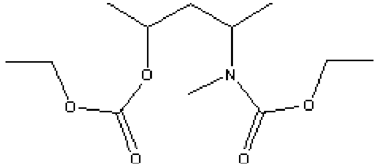 ethyl (4-((ethoxycarbonyl)oxy)pentan-2-yl)(methyl)carbamate (AB-OEt).

In an embodiment, the procatalyst has a content of the activator that is between 1 and 7 wt.%, such as between 2 and 5 wt.% based on the procatalyst weight. In an embodiment, the procatalyst has a content of the internal donor of between 1 and 15 wt.%, preferably between 2 and 8 wt.%. based on the weight of the procatalyst. In an embodiment, the procatalyst has a tetravalent titanium content of between 1.5 and 5.5 wt.%, preferably between 2.0 and 4.5 wt.% based on the procatalyst weight.

In another aspect, the present invention relates to a method for making a procatalyst for an olefin polymerization, which method comprises the steps of: (a) halogenating a magnesium compound of the formula MgR'R" wherein R' is an alkoxide or aryloxide group and wherein R" is an alkoxide or aryloxide group or halogen, with a tetravalent titanium halide in the presence of a halohydrocarbon and an activator being a monoester; to form a first intermediate product; (b) contacting the first intermediate product with a mixture of a tetravalent titanium halide and an internal electron donor according to Formula B; to obtain a second intermediate product; and (c) washing the second intermediate product with an inert hydrocarbon liquid.

In another aspect, the present invention relates to a method for making a procatalyst for olefin polymerization, which method comprises the following steps: (a) halogenating a magnesium compound of the formula MgR'R", wherein R' is an alkoxide or aryloxide group and wherein R" is an alkoxide or aryloxide group or halogen, with a tetravalent titanium halide in the presence of a halohydrocarbon and a monoester activator; to form a first intermediate product; (b1) contacting the first intermediate product with a mixture of a tetravalent titanium halide and an internal electron donor according to Formula B; to obtain a second intermediate product; and (b2) contacting the second intermediate product with a tetravalent titanium halide to obtain a third intermediate product; and (c) washing the third intermediate product with an inert hydrocarbon liquid to obtain a procatalyst.

In another aspect, the present invention relates to a a method for making a procatalyst for olefin polymerization , which method comprises the following steps: (a) halogenating a magnesium compound of the formula MgR'R", wherein R' is an alkoxide or aryloxide group and wherein R" is an alkoxide or aryloxide group or halogen, with a tetravalent titanium halide in the presence of a halohydrocarbon and a monoester activator; to form a first intermediate product; (b1) contacting the first intermediate product with a mixture of a tetravalent titanium halide and a first portion of an internal electron donor according to Formula B; to obtain a second intermediate product; and (b2) contacting the second intermediate product with a tetravalent titanium halide and a second portion of an internal electron donor according to Formula B to obtain a third intermediate product; and (c) washing the third intermediate product with an inert hydrocarbon liquid to obtain a procatalyst.

In a specific embodiment, said magnesium compound is dialkoxymagnesium, wherein said tetravalent titanium halide is a titanium tetrahalide, wherein said activator is ethylbenzoate, wherein said internal donor is ethyl (4-((ethoxycarbonyl)oxy)pentan-2-yl)(methyl)carbamate (AB-OEt) and wherein said inert hydrocarbon liquid is an alkane.

In a specific embodiment, the present invention relates to a a method for making a procatalyst for olefin polymerization , which method comprises the steps of: (a) halogenating a dialkoxymagnesium with titanium tetrahalide in the presence of a halohydrocarbon and ethylbenzoate as activator; to form a first intermediate product; (b) contacting the first intermediate product with a mixture of a titanium tetrahalide and ethyl (4-((ethoxycarbonyl)oxy)pentan-2-yl)(methyl)carbamate (AB-OEt) as internal electron donor; to obtain a second intermediate product; and (c) washing the second intermediate product with an alkane.

In a specific embodiment, the present invention relates to a method for making a procatalyst for olefin polymerization, which method comprises the following steps: (a) halogenating a dialkoxymagnesium with titanium tetrahalide in the presence of a halohydrocarbon and ethylbenzoate as activator; to form a first intermediate product; (b1) contacting the first intermediate product with a mixture of a titanium tetrahalide and ethyl (4-((ethoxycarbonyl)oxy)pentan-2-yl)(methyl)carbamate (AB-OEt) as internal electron donor; to obtain a second intermediate product; and (b2) contacting the second intermediate product with a titanium tetrahalide to obtain a third intermediate product; and (c) washing the third intermediate product with an alkane to obtain a procatalyst.

In a specific embodiment, the present invention relates to a a method for making a procatalyst for olefin polymerization , which method comprises the following steps: (a) halogenating a dialkoxymagnesium with titanium tetrahalide in the presence of a halohydrocarbon and ethylbenzoate as activator; to form a first intermediate product; (b1) contacting the first intermediate product with a mixture of a titanium tetrahalide and a first portion of ethyl (4-((ethoxycarbonyl)oxy)pentan-2-yl)(methyl)carbamate (AB-OEt) as internal electron donor; to obtain a second intermediate product; and (b2) contacting the second intermediate product with a titanium tetrahalide and a second portion of ethyl (4-((ethoxycarbonyl)oxy)pentan-2-yl)(methyl)carbamate (AB-OEt) as internal electron donor to obtain a third intermediate product; and (c) washing the third intermediate product with an alkane to obtain a procatalyst.

In an embodiment, said magnesium compound is diethoxymagnesium, wherein said tetravalent titanium halide is TiCl₄, and wherein said halohydrocarbon is chlorobenzene.

In another aspect, the present invention relates to a polymerization catalyst system comprising the procatalyst according to the invention, a co-catalyst and optionally an external electron donor.

In another aspect, the present invention relates to a process of making a polyolefin, preferably a polypropylene by contacting an olefin with the catalyst system according to the invention.

In another aspect, the present disclosure relates to a polyolefin, preferably a polypropylene, obtained by or obtainable by the process according to the invention.

### Definitions

The following definitions are used in the present description and claims to define the stated subject matter. Other terms not cited below are meant to have the generally accepted meaning in the field.
"internal donor" or "internal electron donor" or "ID" as used in the present description means: an electron-donating compound containing one or more atoms of oxygen (O) and/or nitrogen (N). This ID is used as a reactant in the preparation of a solid procatalyst.
"activator" as used in the present description means: an electron-donating compound containing one or more atoms of oxygen (O) and/or nitrogen (N) which is used to during the synthesis of the procatalyst prior to or simultaneous with the addition of an internal donor.
"external donor" or "external electron donor" or "ED" as used in the present description means: an electron-donating compound used as a reactant in the polymerisation of olefins. An ED is a compound added independent of the procatalyst.
"procatalyst" as used in the present description have the same meaning: a component of a catalyst composition generally comprising a solid support, a transition metal-containing catalytic species and optionally one or more internal donor.
"halide" as used in the present description means: an ion selected from the group of: fluoride (F-), chloride (CI-), bromide (Br-) or iodide (I-).
"alkoxide" or "alkoxy" as used in the present description means: a functional group or side-chain obtained from a alkyl alcohol. It consists of an alkyl bonded to a negatively charged oxygen atom. "alkyl" as used in the present description means: an alkyl group being a functional group or side-chain consisting of carbon and hydrogen atoms having only single bonds. An alkyl group may be straight or branched and may be un-substituted or substituted. An alkyl group may also comprise alkenyl or alkylaryl groups.
"aryloxide" or "aryloxy" or "phenoxy" as used in the present description means: a functional group or side-chain obtained from an aryl alcohol. It consists of an aryl bonded to a negatively charged oxygen atom. "aryl" as used in the present description means: an aryl group being a functional group or side-chain derived from an aromatic ring. An aryl group and may be un-substituted or substituted with straight or branched hydrocarbyl groups. An aryl group also encloses alkaryl groups wherein one or more hydrogen atoms on the aromatic ring have been replaced by alkyl groups.
"MWD" or "Molecular weight distribution" as used in the present description means: the same as "PDI" or "polydispersity index". It is the ratio of the weight-average molecular weight (Mw) to the number average molecular weight (Mn), viz. Mw/Mn, and is used as a measure of the broadness of molecular weight distribution of a polymer. Mw and Mn are determined by GPC using a Waters 150 °C gel permeation chromatograph (GPC) combined with a Viscotek 100 differential viscosimeter; the chromatograms were run at 140 °C using 1,2,4-trichlorobenzene as a solvent; the refractive index detector was used to collect the signal for molecular weights.
"XS" or "xylene soluble fraction" or "CXS" or "cold soluble xylene fraction" as used in the present description means: the weight percentage (wt.%) of soluble xylene in the isolated polymer, measured according to ASTM D 5492-10.
"bulk density" as used in the present description means: the weight per unit volume of a material, including voids inherent in the material as tested. Bulk density is measured as apparent density according to ASTM D1895-96 Reapproved 2010-e1, test method A.
"d50" as used in the present description means: the Particle Size Distribution D50 or median diameter or medium value of the particle size distribution and is measured using Malvern SCIROCCO 2000 laser scattering detector according to ASTM D4464-15.
"production rate" or "yield" as used in the present description means: the amount of kilograms of polymer produced per gram of procatalyst consumed in the polymerization reactor per hour, unless stated otherwise.

Unless stated otherwise, when it is stated that any R group is "independently selected from" this means that when several of the same R groups are present in a molecule they may have the same meaning of they may not have the same meaning. For example, for the compound R₂M, wherein R is independently selected from ethyl or methyl, both R groups may be ethyl, both R groups may be methyl or one R group may be ethyl and the other R group may be methyl.

This present procatalyst has a has excellent catalyst productivity, increased control of product molecular weight distribution, molecular weight and xylene solubles, enhanced hydrogen response along with a short catalyst preparation time and low catalyst manufacturing costs.

The present inventors have observed that polymer produced with the present procatalyst surprisingly showed a combination of high tensile properties and high impact strength, which are highly desired properties for many different applications. Further a product with xylene solubles less than 4 wt.%, preferably less than 2.7 % or even less than 2.5 wt.% was produced according to the present invention, which could potentially target increased stiffness products as per current market requirements.

### Detailed description of the present invention

As discussed above the present invention relates to a procatalyst for polymerization of olefins, which procatalyst is based on a halogenated magnesium compound that is reacted with a tetravalent titanium halide and a monoester activator and an internal donor represented by a compound according to formula B.

The present inventors have observed that one or more objects of the present invention can be achieved by such a procatalyst.

In an embodiment, said activator is a benzoate ester, more preferably ethylbenzoate (EB), and said internal donor is ethyl (4-((ethoxycarbonyl)oxy)pentan-2-yl)(methyl)carbamate (AB-OEt). According to the present inventors this specific combination of EB activator and AB-OEt internal donor in this type of catalyst provides optimal results. The combination of EB as activator and AB-OEt as internal donor is not yet known. However, the present inventors have now found that the combination of a simpler catalyst, based on a magnesium compound that is halogenated and titanated together with EB as activator and AB-OEt as internal donor provides results that are better that expected. The Examples will more clearly show this effect.

In an embodiment, said procatalyst has a content of the activator that is between 1 and 7 wt.%, such as between 2 and 5 wt.% based on the procatalyst weight. The inventors observed that this provides optimal results.

In an embodiment, said procatalyst has a content of the internal donor of between 1 and 15 wt.%, preferably between 2 and 8 wt.%. based on the weight of the procatalyst. The inventors observed that this provides optimal results.

In an embodiment, said procatalyst has a tetravalent titanium content of between 1.5 and 5.5 wt.%, preferably between 2.0 and 4.5 wt.% based on the procatalyst weight. The inventors observed that this provides optimal results.

The present invention moreover relates to a a method for making a procatalyst for olefin polymerization, which method comprises the steps of:
(a) halogenating a magnesium compound of the formula MgR'R" wherein R' is an alkoxide or aryloxide group and wherein R" is an alkoxide or aryloxide group or halogen, with a tetravalent titanium halide in the presence of a halohydrocarbon and an activator being a monoester; to form a first intermediate product;
(b) contacting the first intermediate product with a mixture of a tetravalent titanium halide and an internal electron donor according to Formula B; to obtain a second intermediate product; OR (b1) contacting the first intermediate product with a mixture of a tetravalent titanium halide and an internal electron donor according to Formula B; to obtain a second intermediate product; and (b2) contacting the second intermediate product with a tetravalent titanium halide to obtain a third intermediate product; *OR* (b1) contacting the first intermediate product with a mixture of a tetravalent titanium halide and a first portion of an internal electron donor according to Formula B; to obtain a second intermediate product; and (b2) contacting the second intermediate product with a tetravalent titanium halide and a second portion of an internal electron donor according to Formula B to obtain a third intermediate product; and
(c) washing the intermediate product with an inert hydrocarbon liquid.

The present inventors have observed that the use of an activator and internal donor in the procatalyst, provides an improved procatalyst. The present procatalyst can be prepared in a three step process, including steps (a), (b), and (c). Each of these steps is discussed below.

### STEP (a)

Step (a) relates to halogenating a magnesium compound of the formula MgR'R", wherein R' is an alkoxide or aryloxide group and wherein R" is an alkoxide or aryloxide group or halogen, with a tetravalent titanium halide in the presence of a halohydrocarbon and an activator; to form a first intermediate product.

Examples of suitable magnesium compounds of the formula MgR'R", wherein R' is an alkoxide or aryloxide group and wherein R" is an alkoxide or aryloxide group or halogen are disclosed in US 4,535,068, column 4, lines 11-34 and in US 4,414,132 column 2, lines 33-50. In an embodiment, the magnesium compound is according to MgR'R" wherein R' is an alkoxide or aryloxide group and R" is an alkoxide or aryloxide group, most preferably R'=R". In an embodiment, the magnesium compound is a dialkoxymagnesium compound wherein, in the formula of MgR'R", R' is an alkoxide and R" is an alkoxide, most preferably R'=R". In an embodiment, the magnesium compound is diethoxymagnesium, wherein R'=R"=ethoxide (viz. -OCH₂CH₃). In an embodiment, R' may comprise between 1 and 20 carbon atoms. In an embodiment, R" may comprise between 1 and 20 carbon atoms.

Suitable examples of tetravalent titanium compounds are disclosed in US 4,535,068, column 4, lines 53-58 and in US 4,414,132 column 3, lines 3-8. Examples are: dialkoxy-titanium dihalides, alkoxy-titanium trihalides, phenoxy-titanium trihalides and titanium tetrahalides. In an embodiment, the tetravalent titanium compound is a titanium tetrahalide, preferably TiCl₄.

Suitable examples of the halohydrocarbon are disclosed in US 4,535,068, column 4, line 59 - column 5, line 9 and in US 4,414,132 column 3, lines 10-25. In an embodiment, the halohydrocarbon is an aromatic halohydrocarbon, such as (di)chlorobenzene. In an embodiment, the halohydrocarbon is chlorobenzene. In addition to said halohydrocarbon an inert diluent or solvent may also be present. The same inert solvents as used in step (c) may also be used here.

The ratio between the amount of titanium compound and halohydrocarbon may for example between 25:75 and 75:25, such as between 60:40 and 40:60 or even 50:50 (all in v/v).

During step (a) the halogenation of magnesium is preferably carried out in such a manner that magnesium halide is formed in which the atomic ratio of halogen to magnesium is at least 1.2, preferably at least 1.5. The molar ratio of the magnesium compound and the titanium compound during step (a) are in an embodiment between 0.005 : 1 and 2: 1, preferably between 0.01 : 1 to 1:1.

In an embodiment, the activator is a monoester, preferably a benzoate ester, more preferably ethylbenzoate. More monoesters are discussed in WO 2014/118164, page 7, line 28 to page 8 lines 26. The amount of the activator may be such that the content of the activator in the procatalyst is between 1 and 7 wt.%, such as between 2 and 5 wt.% based on the procatalyst weight.

The molar ratio of the internal electron donor relative to the magnesium may vary between wide limits, for instance from 0.01 to 5.0. Preferably, this molar ratio is from 0.02 to 2.0. More preferably, this molar ratio is from 0.05 to 0.5.

Step (a) may be carried out at temperatures ranging e.g. between 60 °C to 140 °C, preferably between 80 °C to 120 °C, more preferably between 100 °C to 120 °C, such as 110 °C. In an embodiment, the starting compounds are first mixed at room temperature, e.g. 25 °C, and subsequently heated. Step (a) may be carried out for a duration of between 0.1 and 6 hours, preferably between 0.5 and 3.5 hours, such as between 0.5 and 1.0 hour.

After step (a) preferably an additional step is carried out, being step (a'): step (a') filtrating the reaction mixture obtained in step (a) to obtain a solid product, being the first intermediate reaction product. The retentate is the first intermediate reaction product. The filtrate may be discarded. Instead of filtrating, decanting may also be used.

### STEP (b)

Step (b) relates to contacting the first intermediate product with a tetravalent titanium halide and an internal electron donor. There are several aspects and embodiments to this step that will be discussed below.

Suitable examples of tetravalent titanium compounds are disclosed in US 4,535,068, column 4, lines 53-58 and in US 4,414,132 column 3, lines 3-8. In an embodiment, the same tetravalent titanium compound is used in each of the steps (a) and (b). Examples are: dialkoxy-titanium dihalides, alkoxy-titanium trihalides, phenoxy-titanium trihalides and titanium tetrahalides. In an embodiment, the tetravalent titanium compound is a titanium tetrahalide, preferably TiCl₄. In an embodiment, TiCl₄ is used in each of the steps (a) and (b).

Suitable examples of the halohydrocarbon are disclosed in US 4,535,068, column 4, line 59 - column 5, line 9 and in US 4,414,132 column 3, lines 10-25. In an embodiment, the halohydrocarbon is an aromatic halohydrocarbon, such as (di)chlorobenzene. In an embodiment, the halohydrocarbon is chlorobenzene.

The ratio between the amount of titanium compound and halohydrocarbon may for example between 25:75 and 75:25, such as between 60:40 and 40:60 or even 50:50 (all in v/v).

The titanation treatments increase the content of titanium in the solid catalyst. Preferably, the final atomic ratio of tetravalent titanium to magnesium in the procatalyst obtained is between 0.005 to 3.0, preferably from 0.02 to 1.0.

In an embodiment, the final tetravalent titanium content is between 1.5 and 5.5 wt.%, preferably between 2.0 and 4.5 wt.% based on the procatalyst weight.

Step (b) may be carried out at temperatures ranging e.g. between 60 °C to 140 °C, preferably between 80 °C to 120 °C, more preferably between 100 °C to 120 °C, such as 110 °C. Steps (b), or (b1) or (b2) may be carried out for a duration of between 0.1 and 6 hours, preferably between 0.25 and 2 hours, for example 0.33 to 1 hour, such as 0.5 hours.

After step (b) (or afters both of steps (b1) and (b2) preferably an additional step is carried out, being respectively step (b')/(b1')/(b2'):
- step (b') filtrating the reaction mixture obtained in step (b) to obtain a solid product, being the second intermediate reaction product. The retentate is the second intermediate reaction product. The filtrate may be discarded. Instead of filtrating, decanting may also be used.
- step (b1') filtrating the reaction mixture obtained in step (b1) to obtain a solid product, being the second intermediate reaction product. The retentate is the second intermediate reaction product. The filtrate may be discarded. Instead of filtrating, decanting may also be used.
- step (b2') filtrating the reaction mixture obtained in step (b2) to obtain a solid product, being the third intermediate reaction product. The retentate is the third intermediate reaction product. The filtrate may be discarded. Instead of filtrating, decanting may also be used.

The internal donor is represented by a compound according to formula B wherein each R⁸⁰ group is independently a linear, branched or cyclic hydrocarbyl group selected from alkyl, alkenyl, aryl, aralkyl, or alkylaryl groups, and one or more combinations thereof, preferably having from 1 to 30 carbon atoms; R⁸¹, R⁸², R⁸³, R⁸⁴, R⁸⁵, and R⁸⁶ are each independently selected from hydrogen or a linear, branched or cyclic hydrocarbyl group, selected from alkyl, alkenyl, aryl, aralkyl, or alkylaryl groups, and one or more combinations thereof, preferably having from 1 to 20 carbon atoms; R⁸⁷ is a hydrogen or a linear, branched or cyclic hydrocarbyl group, selected from alkyl, alkenyl, aryl, aralkyl, alkoxycarbonyl or alkylaryl groups, and one or more combinations thereof, preferably having from 1 to 20 carbon atoms; N is nitrogen atom; O is oxygen atom; and C is carbon atom; most preferably wherein said compound according to Formula B is ethyl (4-((ethoxycarbonyl)oxy)pentan-2-yl)(methyl)carbamate (AB-OEt).

In an embodiment, R⁸¹, R⁸², R⁸³, R⁸⁴, R⁸⁵, and R⁸⁶ of Formula B are independently selected from a group consisting of hydrogen, C₁-C₁₀ straight and branched alkyl; C₃-C₁₀ cycloalkyl; C₆-C₁₀ aryl; and C₇-C₁₀ alkaryl and aralkyl group. In a further embodiment, R⁸¹ and R⁸² are each a hydrogen atom and R⁸³, R⁸⁴, R⁸⁵, and R⁸⁶ are independently selected from a group consisting of C₁-C₁₀ straight and branched alkyl; C₃-C₁₀ cycloalkyl; C₆-C₁₀ aryl; and C₇₋C₁₀ alkaryl and aralkyl group, preferably from C₁-C₁₀ straight and branched alkyl and more preferably from methyl, ethyl, propyl, isopropyl, butyl, tert-butyl, phenyl group. In a further embodiment, when one of R⁸³ and R⁸⁴ and one of R⁸⁵ and R⁸⁶ has at least one carbon atom, then the other one of R⁸³ and R⁸⁴ and of R⁸⁵ and R⁸⁶ is each a hydrogen atom. In a further embodiment, R⁸⁷ is selected from a group consisting of methyl, ethyl, propyl, isopropyl, butyl, tert-butyl, phenyl, benzyl, substituted benzyl and halophenyl group. In a further embodiment, R⁸⁰ is a aliphatic hydrocarbyl group or an aromatic hydrocarbyl group. R⁸⁰ may be substituted on unsubstituted. In case R⁸⁰ is an aliphatic hydrocarbyl group, it may be selected from the group consisting of aliphatic substituted and unsubstituted hydrocarbyls having 1 to 30 carbon atoms, preferably 1 to 20 carbon atoms, more preferably 1 to 6 carbon atoms. More preferably, R⁸⁰ is selected from the group consisting of methyl, ethyl, n-propyl, i-propyl, n-butyl, 2-butyl, t-butyl, pentyl or hexyl. Most preferably, R⁸⁰ is ethyl. In case R⁸⁰ is an aromatic hydrocarbyl group, it may be phenyl or substituted phenyl or any other aromatic group having from 6 to 20 carbon atoms.

Two preferred examples compounds according to formula B are : 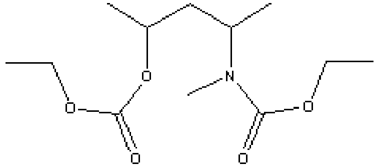 ethyl (4-((ethoxycarbonyl)oxy)pentan-2-yl)(methyl)carbamate 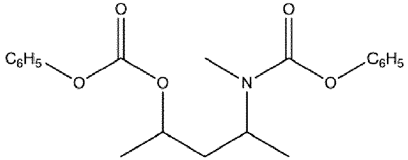 phenyl (4-((phenoxycarbonyl)oxy)pentan-2-yl)(methyl)carbamate

In an embodiment, the content of the internal donor in the procatalyst (based on the weight of the procatalyst) is between 1 and 15 wt.%, preferably between 2 and 8 wt.%.

In a first aspect, step (b) comprises two sub steps (b1) and (b2): (b1) contacting the first intermediate product with a mixture of a tetravalent titanium halide and an internal electron donor; to obtain a second intermediate product; and (b2) contacting the second intermediate product with a tetravalent titanium halide to obtain a third intermediate product. In this aspect the internal donor is added in a single addition during step (b1). This embodiment, comprises in step (a) halogenation of magnesium, the addition of an activator and a 1^{st} titanation, in step (b1) the addition of a ID and a 2^{nd} titanation and in step (b2) a 3^{rd} titanation. Step (c) relates to the work up. A procatalyst prepared according to this first aspect produces a polymer having a regular or broad molecular weight distribution and a relatively low value for xylene solubles.

In a second aspect, step (b) comprises two sub steps: (b1) contacting the first intermediate product with a mixture of a tetravalent titanium halide and a first portion of an internal electron donor; to obtain a second intermediate product; and (b2) contacting the second intermediate product with a mixture of a tetravalent titanium halide and a second portion of an internal electron donor; to obtain a third intermediate product. This embodiment, comprises in step (a) halogenation of magnesium, the addition of an activator and a 1^{st} titanation, in step (b1) the addition of a ID and a 2^{nd} titanation and in step (b2) the addition of a ID and a 3^{rd} titanation. Step (c) relates to the work up. A procatalyst prepared according to this first aspect produces a polymer having a somewhat more narrow molecular weight distribution and an even lower value for xylene solubles.

The difference between the first and second embodiment is the fact that the internal electron donor is added in either a single step (step b) or b1) - first aspect) or in two separate steps (steps b1) and b2) - second aspect). By tuning this addition of the internal electron donor, the properties of the procatalyst may be tuned. In this aspect, the first portion and the second portion combined make up 100 % of the internal electron donor. The division between the first and second portions may for example be from 80%/20% to 20%/80%, more preferably 60%/40% to 40%/60%, most preferably 50%/50%; viz. during each of b1 and b2 half of the total amount is added.

### STEP (c)

Step (c) relates to washing the intermediate product obtained with an inert hydrocarbon liquid.

The washing of step (c) may be carried out with one or more washing cycles. During each washing cycle the solid intermediate product is contacted with an amount of intern hydrocarbon liquid and mixed. For example, two, three, four, five, six or seven washing cycles may be carried out. The amount of liquid added during each washing cycle may be determined by the person skilled in the art. The liquid may be different or the same during each washing cycle, preferably the same. The amount of liquid may be different or the same during each washing cycle, preferably the same.

In an embodiment, step (c) may be carried out at a temperature of between room temperature and 100 °C, preferably between room temperature and 60 °C. The temperature during step (c) may be constant or may be decreased, e.g. from 60 °C to 25 °C, in several steps. For example when 5 washing cycles are carried out, the temperature may be decreased with each cycle. The temperature may be determined by the temperature of the liquid to be added or by external cooling or heating.

In an embodiment, the inert hydrocarbon liquid is an alkane, such as n-pentane, isopentane, n-hexane, n-heptane, iso-octane, preferably n-heptane or isopentane. However, toluene may also be used. This inert hydrocarbon liquid is used to wash the solid intermediate product obtained. During this washing any unreacted material, including physically absorbed halohydrocarbon may be removed.

After step (c) preferably an additional step is carried out, being step (c'): step (c') filtrating the reaction mixture obtained in step (c) to obtain a solid product, being the procatalyst. The retentate is the procatalyst. The filtrate may be discarded. Instead of filtrating, decanting may also be used.

The procatalyst can be used as such wetted by the solvent or suspended in solvent or it can be first dried, preferably partly dried, for storage. After step (c') preferably an additional step is carried out, being step (c"): step (c") drying the solid product obtained in step (c'). This step may for example be carried out by conventional dryings means, such as a flow of an inert gas, e.g. dry nitrogen, during a certain period of time, e.g. between 0.5 and 10 hours, e.g. between 1 and 3 hours, such as 2 hours. Drying can e.g. be carried out by low pressure nitrogen flow for several hours preferably at temperature from 10 to 100°C depending on the boiling point of the solvent used, preferably from 15 to 70 °C. The procatalyst obtained can be used as dried or suspended in mineral oil for storage.

In a further aspect, the present invention relates to a polymerization catalyst system comprising the procatalyst according to the invention, a co-catalyst and optionally an external electron donor. The co-catalyst may be any co-catalyst known in the art that is suitable for this purpose, for example an organoaluminum compound. Examples thereof are disclosed in US 4,535,068, column 6, lines 45-55 and in US 4,414,132 column 4, lines 43-53. The external electron donor may be any external electron donor known in the art that is suitable for this purpose. Examples thereof are disclosed in US 4,535,068, column 6, lines 20-37 and in US 4,414,132 column 4, lines 14-43. A preferred external electron donor is cyclohexylmethyldimethoxysilane. The ratio of external electron donor to atomic Ti from the procatalyst is between 100 to 1 and 1 to 1, such as 25 to 1.

To prepare the catalyst or catalyst system according to the present invention the procatalyst, co-catalyst and external electron donor may be simply combined.

In an embodiment, they are combined in such a manner that the ratio of aluminium from the co-catalyst to titanium from the procatalyst is between 1:1 and 500:1, preferably between 30:1 and 110:1.

The present invention moreover relates to a process of making a polyolefin, preferably a polypropylene by contacting an olefin with the catalyst system according to the present invention. Contacting the olefin with the catalyst system according to the present invention can be done under standard polymerization conditions, known to the skilled person in the art. See for example Pasquini, N. (ed.) "Polypropylene handbook" 2nd edition, Carl Hanser Verlag Munich, 2005. Chapter 6.2 and references cited therein.

Said polymerization process may e.g. be a slurry/liquid or gas phase process. The polymerization is carried out at a temperature of between 0 and 120 °C, preferably from 40 °C to 100 °C, e.g. 67°C. The pressure during (propylene) (co)polymerization is for instance from 10 to 60 barg (bar gauge), preferably from 20 to 40 barg. The polymerization is carried out in a continuous or batch process.

The present disclosure relates to a polyolefin, preferably a polypropylene, obtained by or obtainable by the process according to the present invention.

The polyolefin, preferably the polypropylene, has a molecular weight distribution higher than 3, preferably higher than 4, more preferably lower than 15 and for instance below 7.

The production rate is preferably from about 1 kg/g/hr to about 100 kg/g/hr, or from about 10 kg/g/hr to about 80 kg/g/hr. The bulk density is preferably more than 300 kg/m3. The percentage crystallinity is preferably between 40 and 60%. The tensile strength at yield is preferably between 30 and 60 MPa. The tensile strength at break is preferably between 10 and 40 MPa. The tensile elongation is preferably between 5 and 30 %. The E-modulus is preferably between 1100 and 1600 MPa. The flexural strength is preferably between 20 and 60 MPa. The flexural modulus is preferably between 900 and 1300 MPa. The Izod impact is preferably between 15 and 40 J/m.

The present polymer may have fiber, BOPP and injection molding grades.

The present disclosure relates to a shaped article, comprising the polyolefin, preferably the polypropylene.

The procatalyst according to the present was found to produce polyolefins with a molecular weight distribution of 3 to 15, or even 4 to 7. This range of molecular weight distribution which is suitable for fibre, biaxially orientated polypropylene film and injection molding articles applications.

When compared with more complex catalyst, such as those based on magnesium compound prepared from a reaction product of Grignard and silane compounds with numerous titanation steps, the present procatalyst has lower catalyst manufacturing costs due to elimination of the requirement of additional titanation steps, the lower requirement of the activator, no requirements regarding support activation and the utilization of a low cost support, superior titanation temperature stability. This allows a broader operation condition manufacturing window and higher catalyst productivity in polymerization. The present procatalyst has shown superior elasticity as compared to a similar procatalyst having a different donor and without activator.

The present invention is further elucidated based on the Examples below which are illustrative.

### Examples

Several different procatalysts were synthesized according to the Synthesis Examples below respectively. The specifications of these procatalysts are provided in Table 1.

Table 1 shows in the first column the number of the synthesis example, in the second column the designation of the procatalyst, in the third column the activator as well as the amount thereof (between brackets), in the fourth column the reaction temperature in first three steps, in the fifth column the internal donor as well as the amount thereof (between brackets), in the sixth column the d50 value in microns of the procatalyst particles obtained (also known as Particle Size Distribution D50 or median diameter or medium value of the particle size distribution) as determined by Malvern SCIROCCO 2000 laser scattering analysis by ASTM D4464-15, in the seventh through the eleventh column the percentage of respectively magnesium, titanium, the internal donor, the activator and the alkoxide of the magnesium alkoxide starting product are shown.

Then these seven different procatalysts were used in the polymerization of propylene. The details thereof are discussed in Polymerization Examples below and Tables 2 and 3.

Table 2 shows in the first column the number of the polymerization example, in the second column the designation of the procatalyst, in the third column productivity for the production of PP (in kilogram per gram catalyst), in the fourth column the bulk density (in kilogram per cubic meter), in the fifth column the weight average molecular weight (M_{w}), (in grams per mole), in the sixth column the number average molecular weight (Mₙ), (in grams per mole), in the seventh column molecular weight distribution (M_{w}/Mₙ), in the eighth column the percentage of xylene solubles, in the ninth and tenth column the melting temperature (Tₘ) and crystallization temperature (T_{c}) respectively (in degrees celcius) and in the eleventh column the crystallinity percentage; these temperatures have been determined by differential scanning calorimetry (DSC) using the method as disclosed in ASTM D3418-12.

Table 3 shows in the first column the number of the polymerization example, in the second column the designation of the procatalyst, in the third and fourth column the tensile strength in MPa at yield and at break respectively, in the fifth column the tensile elongation in percentage, in the sixth column the E-modulus in MPA and in the seventh and eight column the flexural strength (in MPa) and modulus (MPa) and in the ninth column the Izod impact (in J/m). Tensile properties were measures by ASTM D638M-96, flexural properties by ASTM D790-10 and Izod by ASTM D256-10e1 using a Zwick apparatus.

### Synthesis Example 1: Preparation of Procatalyst A

### Step a: halogenation of magnesium and 1^{st} titanation

An amount of 4.5 g of magnesium ethoxide (with an average particle size of 538 microns) was placed in a 300 ml reaction-filtration flask under a nitrogen atmosphere. Then, 100 mL of a mixture of TiCl₄ and chlorobenzene (CB) (40:60 v/v) was added to the flask at a temperature of 25 °C. Then, a solution of 0.8 mL ethylbenzoate (EB) in 3 mL CB was added to the flask at a temperature of 25 °C. The resulting reaction mixture was heated to a temperature of 110 °C and stirred at that temperature for a period of 40 minutes. After the stirring was stopped, the reaction mixture obtained was filtered at 110 °C.

### Step b1: addition of ID and 2^{nd} titanation

The filtrate was discarded and the solid was retained in the flask and subsequently, 100 mL of a mixture of TiCl₄ and CB (40:60 v/v) was added to the flask at a temperature of 25 °C. Next, a solution of 1058 mg of internal donor ethyl (4-((ethoxycarbonyl)oxy)pentan-2-yl)(methyl)carbamate (AB-OEt) in 2 mL of CB was added to the flask. The resulting reaction mixture was heated to a temperature of 110 °C and stirred at that temperature for a period of 30 minutes. After the stirring was stopped, the reaction mixture obtained was filtered.

### Step b2: 3^{rd} titanation

The filtrate was discarded and the solid was retained in the flask and subsequently, 100 mL of a mixture of TiCl₄ and chlorobenzene (40:60 v/v) was added to the flask. The resulting reaction mixture was heated to 110 °C and stirred at that temperature for a period of 30 minutes. After the stirring was stopped, the reaction mixture obtained was filtered.

### Step c: work up

The filtrate was discarded and the solid was retained in the flask and subsequently, the contents of the flask were washed 5 times with 100 mL of heptane starting at a temperature of 60 °C. The solid product was stirred for 5 minutes per wash prior to filtration in which the filtrate was discarded and the solid was retained in the flask. The temperature was gradually reduced from 60 °C to 25 °C during the washings. Finally, the solid product obtained was dried using a nitrogen purge at a temperature of 25°C for a period of 2 hours. The specifications of this procatalyst are provided in Table 1.

### Synthesis Example 2: Preparation of Procatalyst B

Synthesis Example 2 was carried out in the same way as Synthesis Example 1, except that 1.6 mL of EB was used instead of 0.8 mL and that 529 mg of AB-OEt was used instead of 1058 mg. The specifications of this procatalyst are provided in Table 1.

### Synthesis Example 3: Preparation of Procatalyst C

Synthesis Example 3 was carried out in the same way as Synthesis Example 2, except 1587 mg of AB-OEt was used instead of 529 mg. The specifications of this procatalyst are provided in Table 1.

### Synthesis Example 4: Preparation of Procatalyst D

### Step a: halogenation of magnesium and 1^{st} titanation in presence of an activator

An amount of 4.5 g of magnesium ethoxide (with an average particle size of 538 microns) was placed in a 300 ml reaction-filtration flask under a nitrogen atmosphere. Then, 100 mL of a mixture of TiCl₄ and chlorobenzene (CB) (40:60 v/v) was added to the flask at a temperature of 25 °C. Then, a solution of 0.8 mL ethylbenzoate (EB) in 3 mL CB was added to the flask at a temperature of 25 °C. The resulting reaction mixture was heated to a temperature of 110 °C and stirred at that temperature for a period of 40 minutes. After the stirring was stopped, the reaction mixture obtained was filtered at 110 °C.

### Step b1: 1^{st} addition of internal donor and 2^{nd} titanation

The filtrate was discarded and the solid was retained in the flask and subsequently, 100 mL of a mixture of TiCl₄ and CB (40:60 v/v) was added to the flask at a temperature of 25 °C. Next, a solution of 529 mg of internal donor AB-OEt in 2 mL of CB was added to the flask. The resulting reaction mixture was heated to a temperature of 110 °C and stirred at that temperature for a period of 30 minutes. After the stirring was stopped, the reaction mixture obtained was filtered.

### Step b2: 2^{nd} addition of internal donor and 3^{rd} titanation

The filtrate was discarded and the solid was retained in the flask and subsequently, 100 mL of a mixture of TiCl₄ and chlorobenzene (40:60 v/v) was added to the flask. Next, a solution of 529 mg of internal donor AB-OEt in 2 mL of CB was added to the flask. The resulting reaction mixture was heated to 110 °C and stirred at that temperature for a period of 30 minutes. After the stirring was stopped, the reaction mixture obtained was filtered.

### Step c: work up

The filtrate was discarded and the solid was retained in the flask and subsequently, the contents of the flask were washed 5 times with 100 mL of heptane starting at a temperature of 60 °C. The solid product was stirred for 5 minutes per wash prior to filtration in which the filtrate was discarded and the solid was retained in the flask. The temperature was gradually reduced from 60 °C to 25 °C during the washings. Finally, the solid product obtained was dried using a nitrogen purge at a temperature of 25°C for a period of 2 hours. The specifications of this procatalyst are provided in Table 1.

### Synthesis Example 5: Preparation of Procatalyst E

Synthesis Example 5 was carried out in the same way as Synthesis Example 1, except the reaction temperature was maintained at a temperature of 96 °C instead of a temperature of 110 °C for each of the steps 1), 2), 3) and 4). The specifications of this procatalyst are provided in Table 1.

### Synthesis Example 6: Preparation of Procatalyst F

Synthesis Example 6 was carried out in the same way as Synthesis Example 1, except that the ratio of the mixture of TiCl₄ and chlorobenzene was 50:50 by volume instead of 40:60 by volume. The specifications of this procatalyst are provided in Table 1.

### Synthesis Example 7*: Preparation of Procatalyst G*

### Step 1*) halogenation of magnesium and 1^{st} titanation in presence of activator

An amount of 5.7 g of magnesium ethoxide (with an average particle size of 538 microns) was placed in a 300 ml reaction-filtration flask under a nitrogen atmosphere. Then, 150 mL of a mixture of TiCl₄ and chlorobenzene (CB) (50:50 v/v) was added to the flask at a temperature of 25 °C. Then, a solution of 2.4 mL ethylbenzoate (EB) in 3 mL CB was added to the flask at a temperature of 25 °C. The resulting reaction mixture was heated to a temperature of 110 °C and stirred at that temperature for a period of 60 minutes. After the stirring was stopped, the reaction mixture obtained was filtered at 110 °C.

### Step 2*) 2^{nd} titanation

The filtrate was discarded and the solid was retained in the flask and subsequently, 150 mL of a mixture of TiCl₄ and CB (50:50 v/v) was added to the flask at a temperature of 25 °C. The resulting reaction mixture was heated to a temperature of 110 °C and stirred at that temperature for a period of 30 minutes. After the stirring was stopped, the reaction mixture obtained was filtered.

### Step 3*) activation with acid chloride and 3^{rd} titanation

The filtrate was discarded and the solid was retained in the flask and subsequently, 150 mL of a mixture of TiCl₄ and chlorobenzene (50:50 v/v) was added to the flask. Next, 0.4 mL of benzoyl chloride was added to the flask. The resulting reaction mixture was heated to 110 °C and stirred at that temperature for a period of 30 minutes. After the stirring was stopped, the reaction mixture obtained was filtered.

### Step 4*) work up

The filtrate was discarded and the solid was retained in the flask and subsequently, the contents of the flask were washed 6 times with 150 mL of isopentane at a temperature of 25 °C. The solid product was stirred for 5 minutes per wash prior to filtration in which the filtrate was discarded and the solid was retained in the flask. Finally, the solid product obtained was dried using a nitrogen purge at a temperature of 40°C for a period of 90 minutes. The specifications of this procatalyst are provided in Table 1.

### Synthesis Example 8: Preparation of Procatalyst H

Synthesis Example 8 was carried out as a scaled up batch in the same way as Synthesis Example 1, all amounts used were multiplied by 2222 times. The specifications of this procatalyst are provided in Table 1.

### Synthesis Example 9*: Preparation of Procatalyst I*

Synthesis Example 9* was prepared according to the following procedure.

### Step A) Grignard formation step

This step was carried out as described in Example XVI of EP 1 222 214 B1. A stainless steel reactor of 9 I volume was filled with 360 grams of magnesium powder. The reactor was brought under a nitrogen atmosphere. The magnesium was heated at 80 °C for 1 hour, after which a mixture of dibutyl ether (1 liter) and chlorobenzene (200 ml) was added. Then iodine (0.5 g) and n-chlorobutane (50 ml) were successively added to the reaction mixture. After the color of the iodine had disappeared, the temperature was raised to 94°C. Then a mixture of dibutyl ether (1.6 liter) and chlorobenzene (400 ml) was slowly added over a period of 1 hour. Then 4 liter of chlorobenzene was slowly added over a period of 2 hours. The temperature of reaction mixture was kept in interval 98-105 °C. The reaction mixture was stirred for another 6 hours at a temperature between 97 and 102 °C. Then the stirring and heating were stopped and the solid material was allowed to settle for 48 hours. By decanting the solution above the precipitate, a solution of phenyl magnesium chloride reaction product with a concentration of 1.3 mol Mg/I has been obtained. This solution was used in the next step.

### Step 8) Preparation of support

This step was carried out as described in Example XX of EP 1 222 214 B1, except that the dosing temperature of the reactor was 35 °C, the dosing time was 360 min and the propeller stirrer was used. 250 ml of dibutyl ether was introduced to a 1 liter reactor. The reactor was fitted by propeller stirrer and two baffles. The reactor was thermostated at 35 °C. The solution of reaction product of step A (360 ml, 0.468 mol Mg) and 180 ml of a solution of tetraethoxysilane (TES) in dibutyl ether (DBE), (55 ml of TES and 125 ml of DBE), were cooled to 10°C, and then were dosed simultaneously to a mixing device of 0.45 ml volume supplied with a stirrer and jacket. Dosing time was 360 min. Thereafter the premixed reaction product A and the TES-solution were introduced to a reactor. The mixing device (mini-mixer) was cooled to 10°C by means of cold water circulating in the mini-mixer's jacket. The stirring speed in the mini-mixer was 1000 rpm. The stirring speed in reactor was 350 rpm at the beginning of dosing and was gradually increased up to 600 rpm at the end of dosing stage. On the dosing completion the reaction mixture was heated up to 60°C and kept at this temperature for 1 hour. Then the stirring was stopped and the solid substance was allowed to settle. The supernatant was removed by decanting. The solid substance was washed three times using 500 ml of heptane. As a result, a pale yellow solid substance was obtained, suspended in 200 ml of heptane which was used in the next step. The average particle size of this support was 22 µm and span value (d₉₀ -d₁₀)/d₅₀=0.5.

### Step C) support activation

Support activation was carried out as described in Example IV of WO/2007/134851. In inert nitrogen atmosphere at 20°C a 250 ml glass flask equipped with a mechanical agitator is filled with slurry of 5 g of reaction product of step B dispersed in 60 ml of heptane. Subsequently a solution of 0.22 ml ethanol (EtOH/Mg=0.1) in 20 ml heptane is dosed under stirring during 1 hour. After keeping the reaction mixture at 20°C for 30 minutes, a solution of 0.79 ml titanium tetraethoxide (TET/Mg=0.1) in 20 ml of heptane was added for 1 hour. The slurry was slowly allowed to warm up to 30 °C for 90 min and kept at that temperature for another 2 hours. Finally the supernatant liquid is decanted from the solid reaction product which was washed once with 90 ml of heptane at 30 °C. This product was used in the next step.

### Step D) Preparation of the procatalyst

A reactor was brought under nitrogen and 125 ml of titanium tetrachloride was added to it. The reactor was heated to 90 °C and a suspension, containing about 5.5 g of the product obtained in step C) in 15 ml of heptane, was added to it under stirring. The reaction mixture was kept at 90 °C for 10 min. Then add 0.866 g of ethyl benzoate (EB/Mg=0.25 mol). The reaction mixture was kept for 60 min. Then the stirring was stopped and the solid substance was allowed to settle. The supernatant was removed by decanting, after which the solid product was washed with chlorobenzene (125 ml) at 100 °C for 20 min. Then the washing solution was removed by decanting, after which a mixture of titanium tetrachloride (62.5 ml) and chlorobenzene (62.5 ml) was added. The temperature of reaction mixture was increased to 115 °C and 0.51 g of the internal donor ethyl (4-((ethoxycarbonyl)oxy)pentan-2-yl)(methyl)carbamate (AB-OEt as ID/Mg = 0.05 mol) in 2 ml of chlorobenzene was added to reactor. Then the reaction mixture was kept at 115°C for 30 min. After which the stirring was stopped and the solid substance was allowed to settle. The supernatant was removed by decanting, after which a mixture of titanium tetrachloride (62.5 ml) and chlorobenzene (62.5 ml) was added. The reaction mixture was kept at 115 °C for 30 min, after which the solid substance was allowed to settle. The supernatant was removed by decanting and the solid was washed five times using 150 ml of heptane at 60⁰C, after which the procatalyst, suspended in heptane, was obtained.

### Synthesis Example 10*: Preparation of Procatalyst J*

Synthesis Example 10* was prepared according to Example IV of WO2007/134851. The specifications of this procatalyst are provided in Table 1.

### Polymerization Example 1: Using Procatalyst A

Liquid pool propylene polymerization was carried out in a one gallon bench scale reactor. The method of polymerization involved baking the polymerization reactor at a temperature of 110°C for a period of 60 minutes, then applying three high pressure (15 bar) nitrogen purges at a temperature 110°C, then lowering the reactor temperature to 30°C whilst purging the reactor with nitrogen. Then the reactor was purged three times with 50 g of propylene for each purge. Then 1.375 kg of liquid propylene was introduced to the reactor followed by the addition of 1.38 MPa (200 psig) hydrogen to the reactor from an 75 mL stainless steel cylinder. The reactor temperature was then raised to 62°C with a stirring speed of 500 rpm and 0.25 mmol of the external electron donor, cyclohexylmethyldimethoxysilane, was injected into the reactor. Then, 2.0 mmol of a co-catalyst, triethylaluminium was injected in the reactor. Then the procatalyst, corresponding to 0.01 mmol Ti, was injected into the reactor. The reactor temperature was then raised to 67°C and the stirring speed increased to 1500 rpm and polymerization was carried out for a period of 1 hour. After this period had expired, the propylene in the reactor was vented and as a product polypropylene was obtained. The yield was determined after allowing the product to dry. Polymerization and product analysis results are given in Table 2.

### Polymerization Example 2: Using Procatalyst B

Polymerization Example 1 was repeated except that procatalyst B was used in the process. Polymerization and product analysis results are given in Table 2.

### Polymerization Example 3: Using Procatalyst C

Polymerization Example 1 was repeated except that procatalyst C was used in the process. Polymerization and product analysis results are given in Table 2.

### Polymerization Example 4: Using Procatalyst D

Polymerization Example 1 was repeated except that procatalyst D was used in the process. Polymerization and product analysis results are given in Table 2.

### Polymerization Example 5: Using Procatalyst E

Polymerization Example 1 was repeated except that procatalyst E was used in the process. Polymerization and product analysis results are given in Table 2.

### Polymerization Example 6: Using Procatalyst F

Polymerization Example 1 was repeated except that procatalyst F was used in the process. Polymerization and product analysis results are given in Table 2.

### Polymerization Example 7*: Using Procatalyst G*

Polymerization Example 1 was repeated except that procatalyst G* was used in the process. Polymerization and product analysis results are given in Table 2.

### Polymerization Example 8: Using Procatalyst H

Polymerization Example 1 was repeated except that procatalyst H was used in the process. Polymerization and product analysis results are given in Table 3.

### Polymerization Example 9*: Using Procatalyst I*

Polymerization of propylene was carried out in a stainless steel reactor (with a volume of 0.7 I) in heptane (300 ml) at a temperature of 70°C, total pressure 0.7 MPa and hydrogen presence (55 ml) for 1 hour in the presence of a catalyst system comprising the procatalyst according to step D of comparative Example 8, triethylaluminium as co-catalyst and n-propyltrimethoxy-silane as external donor. The concentration of the procatalyst was 0.033 g/l; the concentration of triethylaluminium was 4.0 mmol/l; the concentration of n-propyltrimethoxysilane was 0.2 mmol/l. Polymerization and product analysis results are given in Table 2.

### Polymerization Example 10*: Using Procatalyst K*

Polymerization Example 1 was carried out as disclosed in WO2007/134851. Polymerization and product analysis results are given in Table 3.

**Table 1:**

| **S.E.#** | **Procat.** | **ACT ([mL])** | **Temp [°C]** | **ID [(mg])** | **d50 [µm]** | **Mg [%]** | **Ti [%]** | **ID [%]** | **ACT [%]** | **RO [%]** |
|---|---|---|---|---|---|---|---|---|---|---|
| 1 | A | EB (0.8) | 110 | AB-OEt (1058) | 6700 | 18.04 | 2.81 | 3.20 | 3.33 | 2.78 |
| 2 | B | EB (1.6) | 110 | AB-OEt (529) | 79.78 | 19.12 | 2.57 | 2.15 | 6.19 | 1.88 |
| 3 | C | EB (1.6) | 110 | AB-OEt (1587) | 78.18 | 20.06 | 2.64 | 3.00 | 3.34 | 3.13 |
| 4 | D | EB (0.8) | 110 | AB-OEt (529/529) | 75.76 | 17.92 | 2.47 | 4.15 | 3.38 | 3.33 |
| 5 | E | EB (0.8) | 96 | AB-OEt (1058) | 61.00 | 17.54 | 2.80 | 5.51 | 3.05 | 2.47 |
| 6 | F^{#} | EB (0.8) | 110 | AB-OEt (1058) | 77.00 | 17.24 | 2.79 | 3.76 | 2.53 | 1.54 |
| 7* | G*^{#} | EB(2.4) | 110 | BC (0.4 mL) | 8400 | 17.98 | 2.87 | - | 900 | 0.25 |
| 8 | H | EB (0.8) | 110 | AB-OEt (1058) | 6700 | 18.04 | 2.81 | 3.20 | 3.33 | 2.78 |
| 9* | I*$ | EB (EB/Mg = 0.25) | 110 | AB-OEt (ID/Mg= 005) | n.d. | n.d. | 3.2 | 3.0 | n.d. | n.d. |
| 10* | J*$ | n.a. | 110 | DNBP (2.4 mL) | n.d. | nd | 2.3 | nd | nd | nd |

| | | | | | | | | | | |
|---|---|---|---|---|---|---|---|---|---|---|
| * comparative examples # 50:50 v/v of TiCl₄/CB in all titanation steps instead of 40:60 $ different process using e.g. Grignard and silane reagents | | | | | | | | | | |

**Table 2:**

| **P.E.#** | **Procat.** | **Prod. [kg/g·cat]** | **BD [kg/m³]** | **Mw [g/mol]** | **Mn [g/mol]** | **MWD** | **XS [%]** | **Tm [°C]** | **Tc [°C]** | **Crys. [%]** |
|---|---|---|---|---|---|---|---|---|---|---|
| 1 | A | 33.7 | 315 | 531,058 | 77,718 | 6.95 | 2.27 | 162.0 | 110.6 | 89.8 |
| 2 | B | 30.7 | 285 | 418,164 | 65,349 | 6.35 | 4.44 | | | |
| 3 | C | 32.2 | 333 | 426,258 | 86,157 | 4.90 | 2.25 | 165.5 | 113.1 | 46.7 |
| 4 | D | 333 | 329 | 473,265 | 82,329 | 5.75 | 1.57 | 167.0 | 110.0 | 45.8 |
| 5 | E | 28.1 | 325 | 395,962 | 72,178 | 5.48 | 2.13 | 159.2 | 112.7 | 54.4 |
| 6 | F | 30.1 | 316 | 347,768 | 74,622 | 4.65 | 2.60 | 160.8 | 112.6 | 48.7 |
| 7* | G* | 17.5 | 330 | 151,650 | 21,750 | 6.97 | 4.56 | 162.0 | - | - |
| 8 | H | 33.7 | 315 | 531,058 | 77,718 | 6.95 | 2.27 | 162.0 | 110.6 | 89.8 |
| 9* | I*^{$} | 8.5 | n.d. | n.d. | n.d. | 5.3 | 4.3 | n.d. | n.d. | n.d. |
| 10* | I*^{$} | 16.2 | n.d. | n.d. | n.d. | n.d. | n.d. | n.d. | n.d. | n.d. |

From this Table is clear that when a procatalyst according to the prior art (procatalyst G*) is compared to a procatalyst according to the present invention (e.g. A) it can be observed that the productivity almost doubles (from 17.5 to 33.7), the molecular weight sharply increases with a very similar bulk density and MWD. The XS also decreases (from 4.56 to 2.27).

When the examples according to the invention (procatalysts A and B) are compared with each other, it is observed that a change in internal donor combination leads to a change in e.g. productivity (lowered), bulk density (lowered), molecular weight (lowered), XS (increased). This clearly shows that by tuning the amounts of both internal donors, the properties of the final polymer may be tuned.

When the method of preparing the procatalyst according to the invention is varied, e.g. when going from procatalyst A (ID added in one single step) to procatalyst D (ID added in two addition steps), the procatalyst characteristics and the product parameters also vary. The d50 increases, the molecular weight and MWD decrease as well as the XS. The melting temperature increases and the percentage of crystallinity decreases. Hence also by tuning the method of preparing the catalyst according to the present invention, the properties of the final polymer may be tuned.

When the method of preparing the procatalyst according to the invention is varied, e.g. when going from procatalyst A (reaction temperature of 110 °C) to procatalyst E (reaction temperature of 96 °C), the procatalyst characteristics and the product parameters also vary. The d50 decreases, the amount of ID increases and the amount of 1^{st} ID decreases as well as the amount of RO. The bulk density increases, the molecular weight and MWD decrease as well as the XS. The melting temperature slightly decreases and the crystallizing temperature slightly increases. Moreover, the percentage of crystallinity decreases. Hence also by tuning the method of preparing the catalyst according to the present invention, the properties of the final polymer may be tuned.

**Table 3:**

| **P.E.#** | **Procat.** | **Tensile strength @ yield (MPa)** | **Tensile strength @ break (MPa)** | **Tensile elongation @ yield (%)** | **E-modulus (MPa)** | **Flexural strength (MPa)** | **Flexural modulus (MPa)** | **Izod impact (J/m)** |
|---|---|---|---|---|---|---|---|---|
| 8 | H | 34.14 | 18.12 | 9.86 | 1283 | 33.1 | 1001 | 26.01 |
| 9* | I*^{$} | 33.61 | 15.66 | 8.92 | 1275 | 33.8 | 1024 | 19.39 |
| 10* | J*^{$} | 33.70 | 17.20 | 9.62 | 1253 | 330 | 1006 | 22.98 |

From this Table is clear that when a catalyst according to the present invention (procatalyst H, up-scaled procatalyst A) is compared to two procatalyst based on a more complex process using Grignard and silane compounds - especially when compared to Procatalyst I* having the same donor combination (EB/AB-OEt) -the following is observed. The tensile strength is increased, the tensile elongation is also increased as well as the E-modulus and Izod impact. The flexural strength and modules are slightly decreased. This shows that with the procatalyst according to the present invention - that are more easy and less costly to prepare - better results are obtained.

## Claims

1. A procatalyst for polymerization of olefins, which procatalyst is based on a halogenated magnesium compound of the formula MgR'R", wherein R' is an alkoxide or aryloxide group and wherein R" is an alkoxide or aryloxide group or halogen, preferably a magnesium dialkoxide compound, that is reacted with a tetravalent titanium halide and a monoester activator and an internal donor represented by a compound according to formula B: 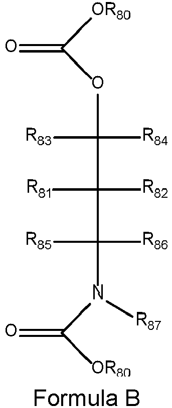 wherein each R⁸⁰ group is independently a linear, branched or cyclic hydrocarbyl group selected from alkyl, alkenyl, aryl, aralkyl, or alkylaryl groups, and one or more combinations thereof, preferably having from 1 to 30 carbon atoms; R⁸¹, R⁸², R⁸³, R⁸⁴, R⁸⁵, and R⁸⁶ are each independently selected from hydrogen or a linear, branched or cyclic hydrocarbyl group, selected from alkyl, alkenyl, aryl, aralkyl, or alkylaryl groups, and one or more combinations thereof, preferably having from 1 to 20 carbon atoms; R⁸⁷ is a hydrogen or a linear, branched or cyclic hydrocarbyl group, selected from alkyl, alkenyl, aryl, aralkyl, alkoxycarbonyl or alkylaryl groups, and one or more combinations thereof, preferably having from 1 to 20 carbon atoms; N is nitrogen atom; O is oxygen atom; and C is carbon atom.

2. A procatalyst according to claim 1, wherein said activator is a benzoate ester, more preferably ethylbenzoate, and said internal donor is: 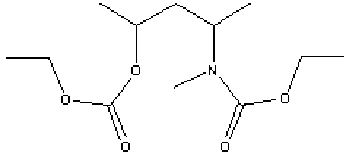 ethyl (4-((ethoxycarbonyl)oxy)pentan-2-yl)(methyl)carbamate (AB-OEt).

3. A procatalyst according to any or of the preceding claims, having a content of the activator that is between 1 and 7 wt.%, such as between 2 and 5 wt.% based on the procatalyst weight.

4. A procatalyst according to any or of the preceding claims, having a content of the internal donor of between 1 and 15 wt.%, preferably between 2 and 8 wt.%. based on the weight of the procatalyst.

5. A procatalyst according to any or of the preceding claims, having a tetravalent titanium content of between 1.5 and 5.5 wt.%, preferably between 2.0 and 4.5 wt.% based on the procatalyst weight.

6. Process for making a procatalyst for polymerization of olefins, which process comprises the steps of:
(a) halogenating a magnesium compound of the formula MgR'R" wherein R' is an alkoxide or aryloxide group and wherein R" is an alkoxide or aryloxide group or halogen, with a tetravalent titanium halide in the presence of a halohydrocarbon and an activator being a monoester; to form a first intermediate product;
(b) contacting the first intermediate product with a mixture of a tetravalent titanium halide and an internal electron donor according to Formula B; to obtain a second intermediate product; and
(c) washing the second intermediate product with an inert hydrocarbon liquid.

7. Process for making a procatalyst for the polymerization of olefins, which process comprises the following steps:
(a) halogenating a magnesium compound of the formula MgR'R" wherein R' is an alkoxide or aryloxide group and wherein R" is an alkoxide or aryloxide group or halogen, with a tetravalent titanium halide in the presence of a halohydrocarbon and a monoester activator; to form a first intermediate product;
(b1) contacting the first intermediate product with a mixture of a tetravalent titanium halide and an internal electron donor according to Formula B; to obtain a second intermediate product; and
(b2) contacting the second intermediate product with a tetravalent titanium halide to obtain a third intermediate product; and
(c) washing the third intermediate product with an inert hydrocarbon liquid to obtain a procatalyst.

8. Process for making a procatalyst for the polymerization of olefins , which process comprises the following steps:
(a) halogenating a magnesium compound of the formula MgR'R" wherein R' is an alkoxide or aryloxide group and wherein R" is an alkoxide or aryloxide group or halogen, with a tetravalent titanium halide in the presence of a halohydrocarbon and a monoester activator; to form a first intermediate product;
(b1) contacting the first intermediate product with a mixture of a tetravalent titanium halide and a first portion of an internal electron donor according to Formula B; to obtain a second intermediate product; and
(b2) contacting the second intermediate product with a tetravalent titanium halide and a second portion of an internal electron donor according to Formula B to obtain a third intermediate product; and
(c) washing the third intermediate product with an inert hydrocarbon liquid to obtain a procatalyst.

9. Process for making a procatalyst for the polymerization of olefins according to claims 6-8, wherein said magnesium compound is dialkoxymagnesium, wherein said tetravalent titanium halide is a titanium tetrahalide, wherein said activator is ethylbenzoate, wherein said internal donor is ethyl (4-((ethoxycarbonyl)oxy)pentan-2-yl)(methyl)carbamate (AB-OEt) and wherein said inert hydrocarbon liquid is an alkane.

10. Process for making a procatalyst for the polymerization of olefins according to any one of claims 6-8, wherein said magnesium compound is diethoxymagnesium, wherein said tetravalent titanium halide is TiCl₄, and wherein said halohydrocarbon is chlorobenzene.

11. A polymerization catalyst system comprising the procatalyst according to any of claims 1 to 5 or obtained by a process according to one of the claims 6 to 10, a co-catalyst and optionally an external electron donor.

12. A process of making a polyolefin, preferably a polypropylene by contacting an olefin with the catalyst system according to claim 11.

## Patentansprüche

1. Prokatalysator zur Polymerisation von Olefinen, wobei der Prokatalysator auf Grundlage einer halogenierten Magnesiumverbindung der Formel MgR'R" steht, wobei R' eine Alkoxid- oder Aryloxidgruppe ist und wobei R" eine Alkoxid- oder Aryloxidgruppe oder Halogen ist, vorzugsweise eine Magnesiumdialkoxidverbindung, die mit einem vierwertigen Titanhalogenid und einem Monoester-Aktivator und einem internen Donator, der durch eine Verbindung gemäß Formel B dargestellt wird, umgesetzt ist: 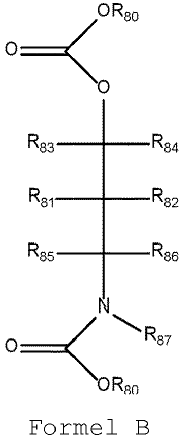 wobei jede R⁸⁰-Gruppe unabhängig eine lineare, verzweigte oder cyclische Hydrocarbylgruppe ausgewählt aus Alkyl-, Alkenyl-, Aryl-, Aralkyl- und Alkylarylgruppen und einer oder mehreren Kombinationen davon ist, vorzugsweise mit von 1 bis 30 Kohlenstoffatomen; R⁸¹, R⁸², R⁸³, R⁸⁴, R⁸⁵ und R⁸⁶ jeweils unabhängig ausgewählt sind aus Wasserstoff und einer linearen, verzweigten oder cyclischen Hydrocarbylgruppe ausgewählt aus Alkyl-, Alkenyl-, Aryl-, Aralkyl- und Alkylarylgruppen und einer oder mehreren Kombinationen davon, vorzugsweise mit von 1 bis 20 Kohlenstoffatomen; R⁸⁷ ein Wasserstoff oder eine lineare, verzweigte oder cyclische Hydrocarbylgruppe ausgewählt aus Alkyl-, Alkenyl-, Aryl-, Aralkyl-, Alkoxycarbonyl- und Alkylarylgruppen und einer oder mehreren Kombinationen davon ist, vorzugsweise mit von 1 bis 20 Kohlenstoffatomen; N Stickstoffatom ist; O Sauerstoffatom ist; und C Kohlenstoffatom ist.

2. Prokatalysator gemäß Anspruch 1, wobei der Aktivator ein Benzoatester, bevorzugter Ethylbenzoat, ist und der interne Donator 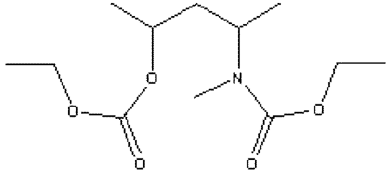 Ethyl-(4-((ethoxycarbonyl)oxy)pentan-2-yl) (methyl)carbamat (AB-OEt) ist.

3. Prokatalysator gemäß einem der vorstehenden Ansprüche mit einem Gehalt an dem Aktivator, der zwischen 1 und 7 Gew.-% beträgt, wie z.B. zwischen 2 und 5 Gew.-%, bezogen auf das Gewicht des Prokatalysators.

4. Prokatalysator gemäß einem der vorstehenden Ansprüche mit einem Gehalt an dem internen Donator von zwischen 1 und 15 Gew.-%, vorzugsweise zwischen 2 und 8 Gew.-%, bezogen auf das Gewicht des Prokatalysators.

5. Prokatalysator gemäß einem der vorstehenden Ansprüche mit einem Gehalt an vierwertigem Titan von zwischen 1,5 und 5,5 Gew.-%, vorzugsweise zwischen 2,0 und 4,5 Gew.-%, bezogen auf das Gewicht des Prokatalysators.

6. Verfahren zur Herstellung eines Prokatalysators für die Polymerisation von Olefinen, wobei das Verfahren die Schritte umfasst:
(a) Halogenieren einer Magnesiumverbindung der Formel MgR'R", wobei R' eine Alkoxid- oder Aryloxidgruppe ist und wobei R" eine Alkoxid- oder Aryloxidgruppe oder Halogen ist, mit einem vierwertigen Titanhalogenid in Gegenwart eines Halogenkohlenwasserstoffs und eines Aktivators, der ein Monoester ist, um ein erstes Zwischenprodukt zu bilden;
(b) Inkontaktbringen des ersten Zwischenprodukts mit einem Gemisch eines vierwertigen Titanhalogenids und eines internen Elektronendonators gemäß Formel B, um ein zweites Zwischenprodukt zu erhalten; und
(c) Waschen des zweiten Zwischenprodukts mit einer inerten Kohlenwasserstoffflüssigkeit.

7. Verfahren zur Herstellung eines Prokatalysators für die Polymerisation von Olefinen, wobei das Verfahren die folgenden Schritte umfasst:
(a) Halogenieren einer Magnesiumverbindung der Formel MgR'R", wobei R' eine Alkoxid- oder Aryloxidgruppe ist und wobei R" eine Alkoxid- oder Aryloxidgruppe oder Halogen ist, mit einem vierwertigen Titanhalogenid in Gegenwart eines Halogenkohlenwasserstoffs und eines Monoester-Aktivators, um ein erstes Zwischenprodukt zu bilden;
(b1) Inkontaktbringen des ersten Zwischenprodukts mit einem Gemisch eines vierwertigen Titanhalogenids und eines internen Elektronendonators gemäß Formel B, um ein zweites Zwischenprodukt zu erhalten; und
(b2) Inkontaktbringen des zweiten Zwischenprodukts mit einem vierwertigen Titanhalogenid, um ein drittes Zwischenprodukt zu erhalten; und
(c) Waschen des dritten Zwischenprodukts mit einer inerten Kohlenwasserstoffflüssigkeit, um einen Prokatalysator zu erhalten.

8. Verfahren zur Herstellung eines Prokatalysators für die Polymerisation von Olefinen, wobei das Verfahren die folgenden Schritte umfasst:
(a) Halogenieren einer Magnesiumverbindung der Formel MgR'R", wobei R' eine Alkoxid- oder Aryloxidgruppe ist und wobei R" eine Alkoxid- oder Aryloxidgruppe oder Halogen ist, mit einem vierwertigen Titanhalogenid in Gegenwart eines Halogenkohlenwasserstoffs und eines Monoester-Aktivators, um ein erstes Zwischenprodukt zu bilden;
(b1) Inkontaktbringen des ersten Zwischenprodukts mit einem Gemisch eines vierwertigen Titanhalogenids und eines ersten Teils eines internen Elektronendonators gemäß Formel B, um ein zweites Zwischenprodukt zu erhalten; und
(b2) Inkontaktbringen des zweiten Zwischenprodukts mit einem vierwertigen Titanhalogenid und einem zweiten Teil eines internen Elektronendonators gemäß Formel B, um ein drittes Zwischenprodukt zu erhalten; und
(c) Waschen des dritten Zwischenprodukts mit einer inerten Kohlenwasserstoffflüssigkeit, um einen Prokatalysator zu erhalten.

9. Verfahren zur Herstellung eines Prokatalysators für die Polymerisation von Olefinen gemäß Ansprüchen 6-8, wobei die Magnesiumverbindung Dialkoxymagnesium ist, wobei das vierwertige Titanhalogenid ein Titantetrahelogenid ist, wobei der Aktivator Ethylbenzoat ist, wobei der interne Donator Ethyl-(4-((ethoxycarbonyl)oxy)pentan-2-yl)(methyl)carbamat (AB-OEt) ist und wobei die inerte Kohlenwasserstoffflüssigkeit ein Alkan ist.

10. Verfahren zur Herstellung eines Prokatalysators für die Polymerisation von Olefinen gemäß einem der Ansprüche 6-8, wobei die Magnesiumverbindung Diethoxymagnesium ist, wobei das vierwertige Titanhalogenid TiCl₄ ist und wobei der Halogenkohlenwasserstoff Chlorbenzol ist.

11. Polymerisationskatalysatorsystem, umfassend den Prokatalysator gemäß einem der Ansprüche 1 bis 5 oder erhalten durch ein Verfahren gemäß einem der Ansprüche 6 bis 10, einen Cokatalysator und gegebenenfalls einen externen Elektronendonator.

12. Verfahren zur Herstellung eines Polyolefins, vorzugsweise eines Polypropylens, durch Inkontaktbringen eines Olefins mit dem Katalysatorsystem gemäß Anspruch 11.

## Revendications

1. Procatalyseur pour la polymérisation d'oléfines, lequel procatalyseur est basé sur un composé du magnésium halogéné de la formule MgR'R",
R' étant un groupe alcoxyde ou aryloxyde et R" étant un groupe alcoxyde ou aryloxyde ou un halogène, préférablement un composé de type dialcoxyde de magnésium, qui est mis à réagir avec un halogénure de titane tétravalent et un activateur de type monoester et un donneur interne représenté par un composé selon la formule B : 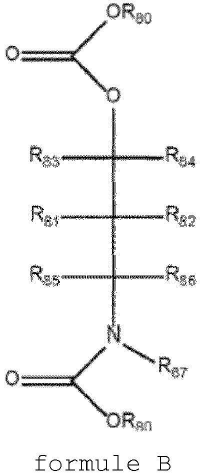 chaque groupe R⁸⁰ étant indépendamment un groupe hydrocarbyle linéaire, ramifié ou cyclique choisi parmi des groupes alkyle, alcényle, aryle, aralkyle ou alkylaryle, et une ou plusieurs combinaisons correspondantes, préférablement ayant de 1 à 30 atomes de carbone ; R⁸¹, R⁸², R⁸³, R⁸⁴, R⁸⁵, et R⁸⁶ étant chacun indépendamment choisis parmi hydrogène ou un hydrocarbyle linéaire, ramifié ou cyclique choisi parmi des groupes alkyle, alcényle, aryle, aralkyle ou alkylaryle, et une ou plusieurs combinaisons correspondantes, préférablement ayant de 1 à 20 atomes de carbone ; R⁸⁷ étant un hydrogène ou un hydrocarbyle linéaire, ramifié ou cyclique choisi parmi des groupes alkyle, alcényle, aryle, aralkyle, alcoxycarbonyle ou alkylaryle, et une ou plusieurs combinaisons correspondantes, préférablement ayant de 1 à 20 atomes de carbone ; N étant un atome d'azote ; O étant un atome d'oxygène ; et C étant un atome de carbone.

2. Procatalyseur selon la revendication 1, ledit activateur étant un ester de benzoate, plus préférablement le benzoate d'éthyle, et ledit donneur interne étant : 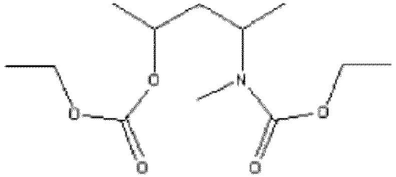 (4-((éthoxycarbonyl)oxy)pentan-2-yl)(méthyl)carbamate d'éthyle (AB-OEt).

3. Procatalyseur selon l'une quelconque des revendications précédentes, ayant une teneur de l'activateur qui est comprise entre 1 et 7 % en poids, telle qu'entre 2 et 5 % en poids sur la base du poids du procatalyseur.

4. Procatalyseur selon l'une quelconque des revendications précédentes, ayant une teneur du donneur interne comprise entre 1 et 15 % en poids, préférablement entre 2 et 8 % en poids sur la base du poids du procatalyseur.

5. Procatalyseur selon l'une quelconque des revendications précédentes, ayant une teneur en titane tétravalent comprise entre 1,5 et 5,5 % en poids, préférablement entre 2,0 et 4,5 % en poids sur la base du poids du procatalyseur.

6. Procédé pour la préparation d'un procatalyseur pour la polymérisation d'oléfines, lequel procédé comprend les étapes de :
(a) halogénation d'un composé du magnésium de la formule MgR'R'', R' étant un groupe alcoxyde ou aryloxyde et R" étant un groupe alcoxyde ou aryloxyde ou un halogène, avec un halogénure de titane tétravalent en la présence d'un halogénohydrocarbure et d'un activateur qui est un monoester ; pour former un premier produit intermédiaire ;
(b) mise en contact du premier produit intermédiaire avec un mélange d'un halogénure de titane tétravalent et d'un donneur d'électrons interne selon la formule B ; pour obtenir un deuxième produit intermédiaire ; et
(c) lavage du deuxième produit intermédiaire avec un liquide hydrocarboné inerte.

7. Procédé pour la préparation d'un procatalyseur pour la polymérisation d'oléfines, lequel procédé comprenant les étapes suivantes :
(a) halogénation d'un composé du magnésium de la formule MgR'R'', R' étant un groupe alcoxyde ou aryloxyde et R" étant un groupe alcoxyde ou aryloxyde ou un halogène, avec un halogénure de titane tétravalent en la présence d'un halogénohydrocarbure et d'un activateur de type monoester ; pour former un premier produit intermédiaire ;
(b1) mise en contact du premier produit intermédiaire avec un mélange d'un halogénure de titane tétravalent et d'un donneur d'électrons interne selon la formule B ; pour obtenir un deuxième produit intermédiaire ; et
(b2) mise en contact du deuxième produit intermédiaire avec un halogénure de titane tétravalent pour obtenir un troisième produit intermédiaire ; et
(c) lavage du troisième produit intermédiaire avec un liquide hydrocarboné inerte pour obtenir un procatalyseur.

8. Procédé pour la préparation d'un procatalyseur pour la polymérisation d'oléfines, lequel procédé comprend les étapes suivantes :
(a) halogénation d'un composé du magnésium de la formule MgR'R'', R' étant un groupe alcoxyde ou aryloxyde et R" étant un groupe alcoxyde ou aryloxyde ou un halogène, avec un halogénure de titane tétravalent en la présence d'un halogénohydrocarbure et d'un activateur de type monoester ; pour former un premier produit intermédiaire ;
(b1) mise en contact du premier produit intermédiaire avec un mélange d'un halogénure de titane tétravalent et d'une première portion d'un donneur d'électrons interne selon la formule B ; pour obtenir un deuxième produit intermédiaire ; et
(b2) mise en contact du deuxième produit intermédiaire avec un halogénure de titane tétravalent et une deuxième portion d'un donneur d'électrons interne selon la formule B pour obtenir un troisième produit intermédiaire ; et
(c) lavage du troisième produit intermédiaire avec un liquide hydrocarboné inerte pour obtenir un procatalyseur.

9. Procédé pour la préparation d'un procatalyseur pour la polymérisation d'oléfines selon les revendications 6 à 8,
ledit composé du magnésium étant un dialcoxymagnésium, ledit halogénure de titane tétravalent étant un tétrahalogénure de titane, ledit activateur étant le benzoate d'éthyle, ledit donneur interne étant le (4-((éthoxycarbonyl)oxy)pentan-2-yl)(méthyl)carbamate d'éthyle (AB-OEt) et ledit liquide hydrocarboné étant un alcane.

10. Procédé pour la préparation d'un procatalyseur pour la polymérisation d'oléfines selon l'une quelconque des revendications 6 à 8, ledit composé du magnésium étant le diéthoxymagnésium, ledit halogénure de titane tétravalent étant TiCl₄, et ledit halogénohydrocarbure étant le chlorobenzène.

11. Système de catalyseur de polymérisation comprenant le procatalyseur selon l'une quelconque des revendications 1 à 5 ou obtenu par un procédé selon l'une quelconque des revendications 6 à 10, un co-catalyseur et éventuellement un donneur d'électrons externe.

12. Procédé de préparation d'une polyoléfine, préférablement d'un polypropylène par mise en contact d'une oléfine avec le système de catalyseur selon la revendication 11.
